(19) **Europäisches Patentamt**

**European Patent Office**

**Office européen des brevets**

(11) **EP 0 770 855 B2**

(12) **NEUE EUROPÄISCHE PATENTSCHRIFT**

(45) Veröffentlichungstag und Bekanntmachung des Hinweises auf die Entscheidung über den Einspruch:
**07.07.2004  Patentblatt 2004/28**

(45) Hinweis auf die Patenterteilung:
**12.09.2001  Patentblatt 2001/37**

(21) Anmeldenummer: **95116555.4**

(22) Anmeldetag: **20.10.1995**

(51) Int Cl.$^7$: **G01F 1/00**, G01F 1/58

(54) **Magnetisch-induktiver Durchflussmesser zur Messung von nicht-newtonschen Flüssigkeiten**

Electromagnetic flow meter for measuring non-Newtonian fluids

Débitmètre électromagnétique pour mesurer des liquides non-Newtoniens

(84) Benannte Vertragsstaaten:
**CH DE DK ES FR GB IT LI NL**

(43) Veröffentlichungstag der Anmeldung:
**02.05.1997  Patentblatt 1997/18**

(73) Patentinhaber:
• **Endress + Hauser (Deutschland) Holding GmbH**
  **79576 Weil am Rhein (DE)**
• **Endress + Hauser Flowtec AG**
  **4153 Reinach BL 1 (CH)**

(72) Erfinder:
• **Mesch, Franz, Prof. Dr.-Ing.**
  **D-76228 Karlsruhe (DE)**
• **Trächtler, Ansgar, Dr.**
  **D-76149 Karlsruhe (DE)**

(56) Entgegenhaltungen:
WO-A-89/12802           DE-A- 2 743 954
DE-A- 3 838 143         DE-A- 4 326 991

• Fiedler O., "Strömungs- und Durchflussmesstechnik", 1992 R. Oldenburg Verlag München Wien, Seiten 207-210

**Beschreibung**

Die Erfindung betrifft einen magnetisch-induktiven Durchflußmesser, mit dem die mittlere Geschwindigkeit und der Fließindex einer elektrisch leitenden, in einem Meßrohr strömenden, nicht-newtonschen Flüssigkeit gemessen werden können.

Da in praxi verwendete Meßrohre i.a. kreiszylindrisch sind, bildet sich darin ein stationäres, rotationssymmetrisches Strömungsprofil aus. Die Strömung ist auch, insb, in zähen Flüssigkeiten, laminar. Deren Geschwindigkeit v ist daher eine Funktion des radialen Abstands r von der Achse des Meßrohrs:

$$v = v(r). \qquad (1)$$

Bei einer laminaren Strömung gleiten Flüssigkeitsschichten unterschiedlicher Geschwindigkeit aufeinander, und zwischen den Schichten tritt aufgrund dieser Reibung eine Schubspannung $\tau$ auf. Das charakteristische Fließverhalten einer realen Flüssigkeit läßt sich durch eine Beziehung zwischen der Schubspannung $\tau$ und der in radialer Richtung auftretenden Geschwindigkeitsänderung, also dem Geschwindigkeltsgradienten, der auch als Schergeschwindigkeit V bezeichnet wird, beschreiben:

$$V = \delta v/\delta r, \qquad (2)$$

worin $\delta$ der bekannte Operator der Differentialrechnung ist und V die Dimension Zeit[1] hat.

Für Newtonsche Flüssigkeiten (im folgenden mit dem Index W bezeichnet) ist nun charakteristisch, daß die Gleichung (2) linear ist:

$$\tau_W = \varepsilon \cdot V. \qquad (3)$$

Darin ist die Proportionalitätskonstante $\in$ die dynamische Viskosität und hat die Dimension (Kraft·Zeit)/Länge[2].

In der DE-A 27 43 954 ist für Newtonsche Flüssigkeiten ein magnetisch-induktiver Durchflußmesser beschrieben, mit dem der Strom einer elektrisch leitenden, in einem Meßrohr strömenden Flüssigkeit zu messen ist, dessen die Flüssigkeit berührender Teil elektrisch nicht-Leitend ist, welcher Durchflußmesser zusätzlich zum Meßrohr umfaßt:

- einen außen an der Wand des Meßrohrs diametral zu einem außen an dieser Wand angeordneten ersten Elektromagneten angeordneten zweiten Elektromagneten,

  -- welche Elektromagnete der Erzeugung eines die Wand des Meßrohrs und die Flüssigkeit durchsetzenden Magnetfelds dienen, wenn in den Spulen der Elektromagnete ein Spulenstrom fließt,

- eine dem Abgriff eines vom Magnetfeld induzierten ersten Potentials dienende erste Elektrode,
- eine dem Abgriff eines vom Magnetfeld induzierten zweiten Potentials dienende zweite Elektrode,
- einen Spulenstrom-Generator,
- einen Umschalter, mit dem die Spulen der Elektromagnete entweder gleichsinnig oder gegensinnig in Serie schaltbar sind, und
- eine Auswerte-Elektronik, die

  -- aus einer bei gleichsinnig in Serie geschalteten Spulen von den Elektroden abgegriffenen ersten Potentialdifferenz und aus einer bei gegensinnig in Serie geschalteten Spulen von den Elektroden abgegriffenen zweiten Potentialdifferenz ein Meßsignal bildet.

Magnetisch-induktiver Durchflußmesser, gezeigt mit dem die mittlere Geschwindigkeit $v_m$ einer elektrisch leitenden, in einem Meßrohr strömenden, nicht-newtonschen Flüssigkeit zu messen sind, dessen die Flüssigkeit berührender Teil elektrisch nicht-leitend ist, welcher Durchflußmesser zusätzlich zum Meßrohr umfaßt:

- eine außen am oder in einer Wand des Meßrohrs diametral zu einer außen am oder in dieser Wand angeordneten ersten Spule angeordnete zweite Spule,

-- welche Spulen der Erzeugung eines die Wand des Meßrohrs und die Flüssigkeit durchsetzenden Magnetfelds dienen, wenn in den Spulen ein Spulenstrom fließt,

- eine dem Abgriff eines vom Magnetfeld induzierten ersten Potentials dienende erste Elektrode,
- eine dem Abgriff eines vom Magnetfeld induzierten zweiten Potentials dienende zweite Elektrode,

-- wobei ein zu jeder Elektrode gehörender Radius des Meßrohrs einen Winkel von weniger als 90° mit der Richtung des Magnetfelds einschließt,

- einen Spulenstrom-Generator,
- einen Umschalter, mit dem die beiden Spulen entweder gleichsinnig oder gegensinnig in Serie schaltbar sind, und
- eine Auswerte-Elektronik (24), die

-- aus einer bei gleichsinnig in Serie geschalteten Spulen von den Elektroden abgegriffenen ersten Potentialdifferenz ($u_k$) ein der mittleren Geschwindigkeit $v_m$ proportionales Geschwindigkeitssignal ($S_v$) bildet.

Darüber hinaus wird mittels der Auswerte-Elektronik aus einer bei gegensinnig in Serie geschalteten Spulen von den Elektroden abgegriffenen zweiten Potentialdifferenz ein vom Strömungsprofil der Flüssigkeit abhängiger Kettenkehrfaktor zur Korrektur der gemessenen Geschwindigkeit gebildet.

Für nicht-newtonsche Flüssigkeiten (im folgenden mit dem Index nW bezeichnet) ist dagegen die Gleichung (2) nichtlinear:

$$\tau_{nW} = f(V) \tag{4}$$

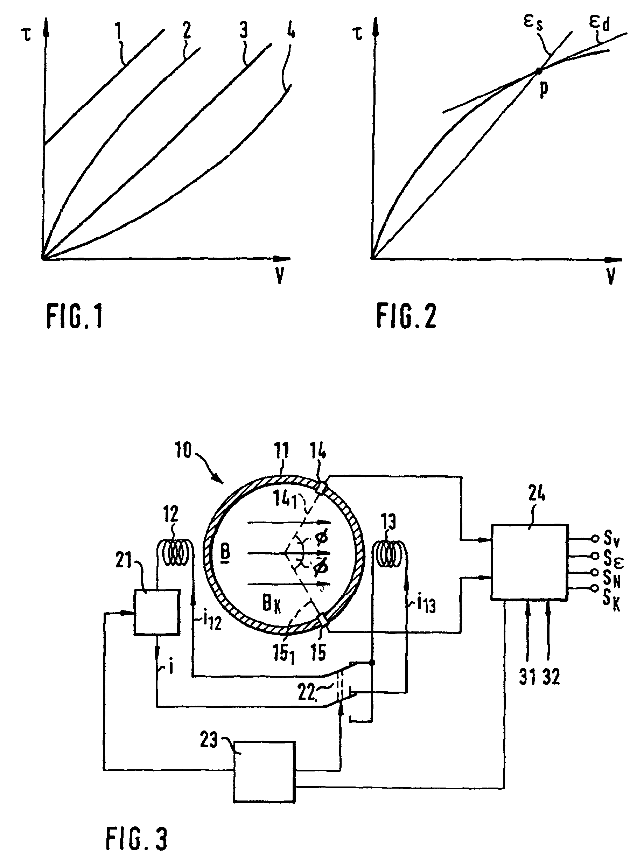

Das jeweilige Fließverhalten von nicht-newtonschen Flüssigkeiten wird in einem Fließdiagramm, dem sogenannten Rheogramm, dargestellt, in dem die Schubspannung $\tau_{nW}$ über der Schergeschwindigkeit V aufgetragen ist. Entsprechend den in Fig. 1 dargestellten Kennlinien werden verschiedene Arten von nicht-newtonschen Flüssigkeiten unterschieden: Es gehören

Kennlinie 1 zu einer Bingham-Flüssigkeit,
Kennlinie 2 zu einer struktur-viskosen Flüssigkeit,
Kennlinie 3 zu einer newtonschen Flüssigkeit und
Kennlinie 4 zu einer dilatanten Flüssigkeit.

Bei nicht-newtonschen Flüssigkeiten ist der Quotient aus Schubspannung und Schergeschwindigkeit nicht konstant. Daher ist auch die Viskosität nicht konstant. Als Ersatz dafür werden die scheinbare Viskosität $\in_s$ und die differentielle Viskosität $\in_d$ definiert, die beide von der Schergeschwindigkeit abhängen.

Entsprechend Fig. 2 ist die scheinbare Viskosität $\in_s$ eines betrachteten Punktes P einer Kennlinie im Rheogramm die Steigung der Sekante Koordinaten-Ursprung/Punkt P. Dagegen ist die differentielle Viskosität $\in_d$ die Steigung der Tangente der Kennlinie im Punkt P.

Es gelten somit:

$$\varepsilon_s = \tau_{nW}/V \tag{5}$$

$$\varepsilon_d = \delta\tau_{nW}/\delta V \tag{6}$$

Für viele technische Anwendungsfälle ist es möglich, die nichtlineare Kennlinie mittels einer einfachen Formel zu approximieren. Verbreitet ist der Potenzansatz nach Ostwald und. de Waele (vgl. das Buch von J. Ulbrecht, P. Mitschka "Nicht-newtonsche Flüssigkeiten", Leipzig, 1967, Seite 26):

$$\tau_{nW} = K|V|^{N-1}.V, \tag{7}$$

wobei mit den senkrechten Strichen der mathematische Betrag bezeichnet ist. Durch diese Betragsschreibweise wird berücksichtigt, daß die Schergeschwindigkeit V auch negativ sein kann.

In Gleichung (7) ist K die Konsistenz und der Exponent N der Fließindex der Flüssigkeit. Im Falle N = 1 ist diese eine newtonsche Flüssigkeit und K ist deren (konstante) Viskosität. Bei N < 1 liegt eine strukturviskose und bei N > 1 eine dilatante Flüssigkeit vor.

Aus der Konsistenz K und aus dem Fließindex N lassen sich die scheinbare und die differentielle Viskosität $\in_s$, $\in_d$ berechnen :

$$\varepsilon_s = \tau_{nW}/V = KV^{N-1} \qquad (8)$$

$$\varepsilon_d = \delta\tau_{nW}/\delta V = KNV^{N-1} \qquad (9)$$

Löst man für eine Flüssigkeit, für die die Potenzbeziehung (7) gültig ist, bei deren voll ausgebildeter laminaren Strömung die hydrodynamischen Differentialgleichungen, so ergibt sich für das Strömungsprofil die Beziehung (vgl. loc. cit., Seite 30):

$$v = f(r) = v_m(1 + 3N)/(1 + N)[1 - (r/R)^{(1 + 1/N)}]. \qquad (10)$$

Darin sind $v_m$ die mittlere Geschwindigkeit und R der Innenradius des Meßrohrs.

Eine Aufgabe der Erfindung besteht nun darin, mindestens die mittlere Geschwindigkeit $v_m$ und den Fließindex N mittels eines magnetisch-induktiven Durchflußmessers zu bestimmen.

Zur Lösung dieser Aufgabe besteht die Erfindung daher in einem magnetisch-induktiven Durchflußmesser, mit dem die mittlere Geschwindigkeit $v_m$ und der Fließindex N einer elektrisch leitenden, in einem Meßrohrströmenden, nicht-newtonschen Flüssigkeit zu messen sind, dessen die Flüssigkeit berührender Teil elektrisch nicht-leitend ist, welcher Durchflußmesser zusätzlich zum Meßrohr umfaßt:

- eine außen am Meßrohr oder in einer Wand des Meßrohr diametral zu einer außen am oder in dieser Wand angeordneten ersten Spule angeordnete zweite Spule,

-- welche Spulen der Erzeugung eines die Wand des Meßrohrs und die Flüssigkeit durchsetzenden Magnetfelds dienen, wenn in den Spulen ein Spulenstrom fließt,

- eine dem Abgriff eines vom Magnetfeld induzierten ersten Potentials dienende erste Elektrode,
- eine dem Abgriff eines vom Magnetfeld induzierten zweiten Potentials dienende zweite Elektrode,

-- wobei ein zu jeder Elektrode gehörender Radius des Meßrohrs einen Winkel von weniger als 90° mit der Richtung des Magnetfelds einschließt,

- einen Spulenstrom-Generator,
- einen Umschalter, mit dem die beiden Spulen entweder gleichsinnig oder gegensinnig in Serie schaltbar sind, und
- eine Auswerte-Elektronik, die

-- aus einer bei gleichsinnig in Serie geschalteten Spulen von den Elektroden abgegriffenen ersten Potentialdifferenz ein der mittleren Geschwindigkeit $v_m$ proportionales Geschwindigkeitssignal bzw.
-- aus einer bei gegensinnig in Serie geschalteten Spulen von den Elektroden abgegriffenen zweiten Potentialdifferenz und der ersten Potentialdifferenz ein dem Fließindex N proportionales Fließindexsignal blidet und anhand des Fließindexsignals den Fließindex N mißt.

Mit einer Weiterbildung der Erfindung kann auch noch die Konsistenz K und/oder die scheinbare Viskosität $\in_s$ bestimmt werden.

Nach dieser Weiterbildung sind in der Wand des Meßrohrs entlang einer seiner Mantellinien ein erster und ein davon beabstandeter zweiter Drucksensor angeordnet, und die Auswerte-Elektronik bildet aus ei ner Differenz von von den Drucksensoren abgegebenen Signalen, aus der ersten Potentialdifferenz und aus der zweiten Potentialdifferenz ein der Konsistenz K der Flüssigkeit proportionales Konsistenzsignal und/oder ein der scheinbaren Viskosität $\in_s$ der Flüssigkeit proportionales Viskositätssignal.

In bevorzugter Ausgestaltung der Erfindung kann der zu jeder Elektrode gehörende Radius des Meßrohrs einen Winkel von 60° oder 45° mit der Richtung des Magnetfelds einschließen.

In der oben erwähnten DE-A-27 43 954 ist die Maßnahme, die beiden Spulen eines magnetisch-induktiven Durchflußmessers abwechselnd gleich- bzw. gegensinnig in Serie zu schalten, an sich schon beschrieben, jedoch zu einem anderen Zweck, nämlich dazu, daß die von den Elektroden abgegriffene Potentialdifferenz von Störungen des Strömungsprofils befreit wird.

Die Erfindung wird nun anhand der Figuren der Zeichnung näher erläutert, in der Ausführungsbeispiele dargestellt und gleiche Teile mit denselben Bezugszeichen versehen sind.

Fig. 1 zeigt   qualitativ-charakteristische Rheogramme verschiedener nicht-newtonscher und newtonscher Flüssigkeiten,

Fig. 2 zeigt   ein der Definition der scheinbaren bzw. der differentiellen Viskosität von nicht-newtonsche Flüssigkeiten dienendes Rheogramm,

Fig. 3 zeigt   schematisch nach Art eines Blockschaltbilds ein Ausführungsbeispiel eines magnetisch-induktiven Durchflußmessers,

Fig. 4 zeigt   ein der Berechnung des Magnetfelds bei gleichsinnig in Serie geschalteten Spulen dienendes prinzipielles Schema,

Fig. 5 zeigt   ein der Berechnung des Magnetfelds bei gegensinnig in Serie geschalteten Spulen dienendes Schema,

Fig. 6 zeigt   die Verteilung des Magnetfelds bei gleichsinnig in Serie geschalteten Spulen entsprechend Fig. 4,

Fig. 7 zeigt   die Verteilung des Magnetfelds bei gegensinnig in Serie geschalteten Spulen entsprechend Fig. 5,

Fig. 8 zeigt   schematisch im Längsschnitt ein Ausführungsbeispiel einer Weiterbildung zur Messung der Konsistenz K und/oder der scheinbaren Viskosität $\in_s$, und

Fig. 9 zeigt   Kurvenformen von Spulenströmen und Taktsignalen.

In Fig. 3 ist schematisch und teilweise nach Art eines Blockschaltbilds ein magnetisch-induktiver Durchflußmesser 10 gezeigt. Dessen mechanischer Teil, also dessen Durchflußaufnehmer, umfaßt ein Meßrohr 11, dessen eine darin strömende Flüssigkeit berührender Teil elektrisch nicht-leitend ist.

Das Meßrohr 11 kann z.B. einerseits vollständig aus einer geeigneten Keramik, insb. Aluminiumoxid-Keramik, oder aus einem geeigneten Kunststoff, insb. Hartgummi, bestehen, andererseits jedoch auch ein nicht-ferromagnetisches Metallrohr sein, dessen Innenwand mit einer Isolierung, z.B. mit einem geeigneten Kunststoff, insb. Hartgummi, Weichgummi oder Polytetrafluorethylen, versehen ist.

Außen am Meßrohr 11 sind diametral zueinander eine erste Spule 12 und eine zweite Spule 13 angeordnet. Diese Spulen erzeugen eine die Wand des Meßrohrs 11 und die Flüssigkeit durchsetzendes Magnetfeld, wenn in den Spulen ein Spulenstrom i fließt. Das Magnetfeld wird im folgenden allgemein durch einen Vektor $\underline{B}$ beschrieben.

Anstatt die Spulen außen am Meßrohr anzuordnen, können diese teilweise auch innerhalb der Wand des Meßrohrs verlaufen, wie dies von der Feldwicklung von Drehstrom-Motoren her bekannt ist.

In Fig. 3 ist mittels der drei parallelen Pfeile veranschaulicht, daß das Magnetfeld ein homogenes Magnetfeld $B_k$ sein kann. Dies ist bei den heute handelsüblichen magnetisch-induktiven Durchflußmessern überwiegend der Fall und wird dadurch erreicht, daß die beiden Spulen 12, 13 gleichsinnig in Serie geschaltet sind, so daß also das von der einen Spule erzeugte Magnetfeld dieselbe Richtung wie das von der anderen Spule erzeugte Magnetfeld hat.

Entsprechend Fig. 3 sind in die Wand des Meßrohrs 11 eine erste Elektrode 14 und eine zweite Elektrode 15 eingesetzt, welche die strömende Flüssigkeit berühren, die Elektroden 14, 15 sind also galvanische Elektroden. Es sind auch von der Flüssigkeit isolierte Elektroden, also kapazitive Elektroden, möglich. Jede dieser (galvanischen bzw. kapazitiven) Elektroden dient dem Abgriff eines vom Magnetfeld aufgrund des Faraday'schen Induktionsgesetzes induzierten Potentials.

Die Elektroden 14, 15 sind abweichend von der Lage der Elektroden von handelsüblichen, lediglich die Messung des Volumen-Durchflusses ermöglichenden magnetisch-induktiven Durchflußmessern angeordnet, bei denen die Elektroden diametral einander gegenüberliegen und die Verbindungslinie der Elektroden senkrecht zur Richtung des dort immer homogenen Magnetfelds ist. Ein zu jeder Elektrode 14, 15 gehörender Radius $14_1$, $15_1$ des Meßrohrs 11 schließt mit der Richtung des homogenen Magnetfelds $B_k$ einen Winkel φ von weniger als 90°, insb. von 60° oder 45°, ein (Details siehe unten).

Ein Spulenstrom-Generator 21 erzeugt einen Spulenstrom i. In der Spule 12 fließt somit ein Spulenstrom $i_{12}$ und in der Spule 13 ein Spulenstrom $i_{13}$. Der Spulenstrom i kann von einer der bei magnetisch-induktiven Durchflußmessern geläufigen Arten, also z.B ein Gleichstrom, ein Wechselstrom oder ein Impulsstrom, sein.

Wie dies bei magnetisch-induktiven Durchflußmessern ferner längst üblich ist, ist auch bei der Erfindung im Falle eines Gleichstroms der Spulenstrom i abschnittsweise bipolar, d.h. seine Stromrichtung wird vom Spulenstrom-Generator 21 periodisch umgekehrt, wie dies z.B. allgemein in der eigenen US-A 44 10 926 beschrieben ist.

Bekanntlich dient dies dazu, an den Elektroden entstehende elektrochemische Potentiale, die sich den induzierten Potentialen überlagern, zu kompensieren, wie dies z.B. in den weiteren eigenen US-A 43 82 387, US-A 44 22 337 und US-A 47 04 908 beschrieben ist.

Bei der Erfindung ist nun zusätzlich zum Spulenstrom-Generator 21 noch ein Umschalter 22 vorhanden, mit dem die Richtung des Spulenstrom in einer der beiden Spulen 12, 13, im Ausführungsbeispiel der Fig. 3 also die Richtung des Spulenstrom $i_{13}$ in der Spule 13, umgepolt werden kann. Dadurch sind die beiden Spulen 12,13 entweder gleichsinnig, wie dies der in Fig. 3 gezeichneten Schalterstellung entspricht, oder gegensinnig in Serie schaltbar.

Das Umschalten des Umschalter 22 von der einen in die andere Schalterstellung wird von einer Ablaufsteuerung 23 bewirkt, die auch den Spulenstrom-Generator 21 im Sinne der erwähnten Umschaltung der Richtung des Spulenstroms $i_{13}$ steuert.

Die Ablaufsteuerung 23 enthält z.B. einen Taktoszillator und einen diesem nachgeschalteten Frequenzteiler, von dem Ausgangssignale seiner einzelnen Stufen über logische Gatter derart verknüpft sind, daß Folgen von Impulsen entstehen, die gewünschte Impulsdauern und Frequenzen haben und mit denen der Spulenstrom-Generator 21 und der Umschalter 22 wie beabsichtigt angesteuert werden können.

Die Fig. 3 enthält schließlich noch eine Auswerte-Elektronik 24, die aus einer bei gleichsinnig in Serie geschalteten Spulen 12, 13 von den Elektroden 14, 15 abgegriffenen ersten Potentialdifferenz ein der mittleren Geschwindigkeit $v_m$ der nicht-newtonschen Flüssigkeit proportionales Geschwindigkeitssignal $S_V$ bzw. aus einer bei gegensinnig in Serie geschalteten Spulen 12, 13 von den Elektroden 14, 15 abgegriffenen zweiten Potentialdifferenz und der ersten Potentialdifferenz ein dem Fließindex N proportionales Fließindexsignal $S_N$ bildet.

Die Auswerte-Elektronik 24 wird mittels eines Signals, das ebenfalls aus der Ablaufsteuerung 23 stammt, so gesteuert, daß sie entweder das Geschwindigkeitssignal $S_V$ oder das Fließindexsignal $S_N$ bildet.

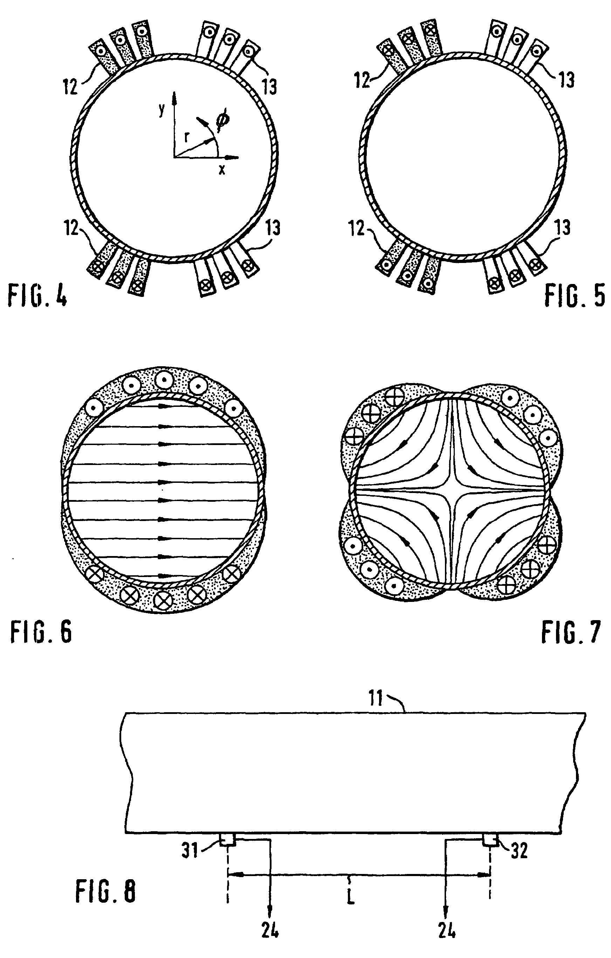

Ferner erhält die Auswerte-Elektronik 24 gegebenenfalls entsprechend einer unten in Zusammenhang mit Fig. 8 näher erläuterten Weiterbildung der Erfindung noch Signale von Drucksensoren 31, 32 zugeführt.

Die Gesetzmäßigkeiten, auf denen die Bildung der Signale $S_V$, $S_N$ beruht, werden nun im folgenden näher erläutert. Hierzu dienen u.a. die Fig. 4 bis 7, die jeweils schematisch einen im Bereich der Spulen 12, 13 liegenden Schnitt senkrecht zur Achse des Meßrohrs 11 zeigen.

In den Fig. 4 und 5 ist die jeweilige Spule 12, 13 durch jeweils drei Windungen veranschaulicht. Durch die an diesen angebrachten Punkte wird angedeutet, daß an diesen Stellen die Richtung des in den Windungen fließenden Stromes senkrecht aus der Zeichenebene heraustritt, während durch die Kreuze angedeutet wird, daß an diesen Stellen die Richtung des Stromes senkrecht in die Zeichenebene eintritt.

Fig. 4 betrifft den Fall, daß die Spulen 12, 13 gleichsinnig strom-durchflossen sind; den zugehörigen Verlauf der magnetischen Feldlinien zeigt Fig. 6. Demgegenüber betrifft Fig. 5 den Fall, daß die Spulen 12, 13 gegensinnig strom-durchflossen sind; den zugehörigen Verlauf der magnetischen Feldlinien zeigt Fig. 7.

In den Fig. 6 und 7 geben die außen an der Wand des Meßrohrs angebrachten gerasterten Flächen in etwa die räumliche Amplitude der Stromstärke an.

In Fig. 4 sind noch zwei der Darstellung der erwähnten Gesetzmäßigkeiten zugrunde liegende Koordinatensysteme gezeigt, nämlich das übliche kartesische Koordinatensystem mit: den aufeinander senkrecht stehenden Koordinaten Abszisse x, Ordinate y und das ebenfalls übliche Polar-Koordinatensystem mit den Koordinaten Radius r, Winkel $\phi$. Der Ursprung beider Koordinatensysteme ist mit dem Mittelpunkt der Querschnittsfläche des Meßrohrs identisch.

Im folgenden ist durch den Index k der Fall der gleichsinnig in Serie geschalteten Spulen 12, 13 und mit dem Index g der Fall der gegensinnig in Serie geschalteten Spulen 12, 13 bezeichnet.

Im Falle der Fig. 4 hat der Vektor $\underline{B}_k$ des Magnetfelds nur eine Komponente mit dem Wert $B_{kx}$ in x-Richtung, während in y-Richtung dessen Komponente $B_{ky}$ gleich null ist.

Im Falle der Fig. 5 hat dagegen der Vektor $\underline{B}_g$ des Magnetfelds eine Komponente $B_{gx}$ in x-Richtung mit dem ortsabhängigen Wert $B_g \cdot x/R$ und eine Komponente $B_{gy}$ in y-Richtung mit der ortsabhängigen Amplitude $B_g \cdot y/R$; R ist der Innenradius des Meßrohrs 11 und $B_g$ der örtlich maximale Wert des Magnetfelds:

$$B_{gx} = B_g \cdot x/R \qquad\qquad (11a)$$

$$B_{gy} = B_g \cdot y/R \tag{11b}$$

Ferner wird für die Berechnung vorausgesetzt, daß für jede Windung ein entsprechender Strombelag definiert ist; dies ist im Falle der Fig. 4 der Strombelag $j_k$ bzw. im Falle der Fig. 5 der Strombelag $j_g$.

Es gelten nun:

$$j_k = B_k/\mu_0(\sin\phi) \tag{12}$$

$$j_g = B_g/\mu_0(\sin 2\phi), \tag{13}$$

worin mit $\mu_0$ die Permeabilität des Vakuums bezeichnet ist.

Für nach Gleichung (1) voraussetzungsgemäß stationäre, rotationssymmetrische Strömungsprofile werden an der Wand des Meßrohrs von den Magnetfeldern $\underline{B}_k$, $\underline{B}_g$ die folgenden Potentiale induziert:

$$U_k(\phi) = (2/R)(B_k M_1)\sin\phi \tag{14}$$

$$U_g(\phi) = (2/R^3)(B_g M_3)\sin 2\phi \tag{15}$$

Es lassen sich nun durch Messung der Potentialdifferenz mittels unter zwei geeigneten Winkeln angeordneter Elektroden die Momente $M_1$, $M_3$ bestimmen. Für diese gilt (in kartesischen Koordinaten):

$$M_1 = \int_{r=0}^{R} v(r)r\,dr = (1/2\pi)\int_{r=0}^{R}\int_{\phi=0}^{2\pi} v(r)r\,d\phi\,dr$$

$$= (1/2\pi)\int\!\!\int_{\Omega} v(x,\,y)\,dx\,dy \tag{16}$$

$$M_3 = \int_{r=0}^{R} v(r)r^3\,dr = (1/2\pi)\int_{r=0}^{R}\int_{\phi=0}^{2\pi} v(r)r^2 r\,d\phi\,dr =$$

$$= (1/2\pi)\int\!\!\int_{\Omega} v(x,\,y)r^2\,dx\,dy \tag{17}$$

In den Gleichungen (16), (17) bedeutet das Doppelintegral über $\Omega$ die Integration über den Querschnitt des Meßrohrs.

Nun gilt aber für die mittlere Strömungsgeschwindigkeit $v_m$:

$$v_m = (1/\pi R^2) \int\int_\Omega v(x,\ y)dxdy \qquad (18)$$

Ein Vergleich der Gleichungen (16), (18) zeigt, daß $M_1$ proportional zu $v_m$ ist:

$$v_m = (2/R^2)M_1 \qquad (19)$$

Demgegenüber hängt das Moment $M_3$ von der Gestalt des Strömungsprofils ab, für das wieder der Potenzansatz nach Ostwald/de Waele entsprechend Gleichung (7) zugrunde gelegt wird. Dann ergibt sich für $M_3$:

$$M_3 = \int_{r=0}^{R} v(r)r^3 dr = \frac{1+3N}{1+N} v_m \int_{r=0}^{R} \left[1\ -\ (r/R)^{1+1/N}\right] r^3 dr$$

$$= \frac{1+3N}{1+N} v_m \left[(R^4/4)\ -\ \frac{R^{5+1/N}}{(5+1/N)R^{1+1/N}}\right]$$

$$= \frac{1+3N}{1+N} v_m R^4 \left[1/4\ -\ N/(1+5N)\right]\ =\ \frac{1+3N}{1+N}\ v_m R^4\ \frac{1+N}{4(1+5N)}$$

$$M_3\ =\ \frac{1+3N}{4(1+5N)}\ v_m R^4 \qquad (20)$$

Nach dem Fließindex N aufgelöst, wobei gemäß Gleichung (19) $(2/R^2)M_1$ für $v_m$ eingesetzt wird, ergibt sich aus Gleichung (20):

$$N = \frac{2M_3 - R^2 M_1}{3R^2 M_1 - 10M_3} \qquad (21)$$

Bei einem üblichen magnetisch-induktiven Durchflußmesser wird die erwähnte Potentialdifferenz mittels zweier Elektroden gemessen, die diametral einander gegenüber liegen, so daß $\phi = \pm\ \pi/2$ ist. Es ergibt sich somit aus den Gleichungen (14), (19):

$$U_k(\pi/2) - U_k(-\pi/2) = (4B_k M_1)/R \qquad (22)$$

$$v_m = (1/2B_k R)[U_k(\pi/2) - U_k(-\pi/2)] \qquad (23)$$

Dies ist aber der für die üblichen magnetisch-induktiven Durchflußmesser längst bekannte Sachverhalt, daß bei homogenem Magnetfeld (entsprechend dem Index k) und bei rotationssymmetrischer, im übrigen aber beliebiger Strömung die induzierte Potentialdifferenz oder Spannung proportional zur mittleren Geschwindigkeit $v_m$ und damit proportional zum Volumendurchfluß ist.

Mit der erläuterten diametralen Anordnung der Elektroden kann allerdings das Moment $M_3$ nicht bestimmt werden, da bei gegensinnig in Serie geschalteten Spu len die entsprechende Potentialdifferenz $U_g(\pi/2) - U_g(-\pi/2)$ immer gleich null ist.

Daher werden entsprechend der Erfindung die Elektroden 14, 15 nicht diametral, sondern unter einem kleineren Gesamtwinkel als 180° angeordnet. Zwei bevorzugte derartige Gesamtwinkel sind 120° bzw. 90°. Die entsprechenden bevorzugten Werte des Winkels $\phi$ bezüglich eines jeweiligen zu den Elektroden 14, 15 gehörenden Radius $14_1$, $15_1$ sind daher:

$$\phi_1 = \pm 60° = \pm \pi/3$$

$$\phi_2 = \pm 45° = \pm \pi/4.$$

Im folgenden beziehen sich also der Index 1 auf $\pm 60°$ und der Index 2 auf $\pm 45°$.

Dann gilt für die mit den Elektroden 14, 15 gemessenen, entsprechenden ersten Potentialdifferenzen oder Spannungen $u_{k1}$, $u_{k2}$ bzw. zweiten Potentialdifferenzen oder Spannungen $u_{g1}$, $u_{g2}$:

$$u_{k1} = U_k(\pi/3) - U_k(-\pi/3) = (2 \cdot 3^{\frac{1}{2}} B_k M_1)/R \qquad (24)$$

$$u_{g1} = U_g(\pi/3) - U_g(-\pi/3) = (2 \cdot 3^{\frac{1}{2}} B_g M_3)/R^3 \qquad (25)$$

$$u_{k2} = U_k(\pi/4) - U_k(-\pi/4) = (2 \cdot 2^{\frac{1}{2}} B_k M_1)/R \qquad (26)$$

$$u_{g2} = U_g(\pi/4) - U_g(-\pi/4) = (4 B_g M_3)/R^3 \qquad (27)$$

Setzt man in die Gleichungen (24), (25) bzw. in die Gleichungen (26), (27) die Gleichung (19) bzw. die Gleichung (20) ein, so ergeben sich die folgenden Bestimmungsgleichungen für die mittlere Geschwindigkeit $v_{m1}$ bzw. $v_{m2}$ und den Fließindex $N_1$ bzw. $N_2$, wobei zur Vereinfachung der Schreibweise noch der Quotient $b = B_g/B_k$ eingeführt wird:

$$v_{m1} = u_{k1}/(3^{\frac{1}{2}} B_k R) \qquad (28)$$

$$v_{m2} = u_{k2}/(2^{\frac{1}{2}} B_k R) \qquad (29)$$

$$N_1 = (2u_{g1} - bu_{k1})/(3bu_{k1} - 10u_{g1}) \qquad (30)$$

$$N_2 = (2^{\frac{1}{2}} u_{g2} - bu_{k2})/(3bu_{k2} - 5 \cdot 2^{\frac{1}{2}} u_{g2}) \qquad (31)$$

Anhand der obigen Gleichungen ist also nachweisbar, daß bei der Erfindung mittels der ersten und der zweiten Potentialdifferenz $u_k$, $u_g$ die mittlere Geschwindigkeit $v_m$ und der Fließindex von nicht-newtonschen Flüssigkeiten gemessen werden kann.

In Fig. 8 ist schematisch im Längsschnitt ein Ausführungsbeispiel einer Weiterbildung der Erfindung gezeigt, wodurch es ermöglicht wird, auch noch die Konsistenz K und/oder die scheinbare Viskosität $\epsilon_S$ von nicht-newtonschen Flüssigkeiten zu messen.

Hierzu sind in der Wand des Meßrohrs 11 entlang einer seiner Mantellinien ein erster und ein davon beabstandeter zweiter Drucksensor 31 , 32 angeordnet. Der Abstand zwischen den beiden Drucksensoren ist mit L bezeichnet.

Die Auswerte-Elektronik 24 bildet aus einer Differenz D der von den Drucksensoren 31, 32 abgegebenen Signale, aus der ersten Potentialdifferenz $u_{k1}$ bzw. $u_{k2}$ und aus der zweiten Potentialdifferenz $u_{g1}$ bzw. $u_{g2}$ ein der Konsistenz K der Flüssigkeit proportionales Konsistenzsignal $S_K$ und/oder ein der scheinbaren Viskosität $\in_s$ der Flüssigkeit proportionales Viskositätssignal $S_\in$.

Dieser Bildung liegt die Gesetzmäßigkeit zugrunde, daß für die Schubspannung $\tau_{nW}$ gilt:

$$\tau_{nW} = D \cdot r/2L \tag{32}$$

Zusammen mit den Gleichungen (2), (5), (10) ergibt sich für den mathematischen Betrag $|V_R|$ der Schergeschwindigkeit $V_R$ an der Wand des Meßrohrs, wo r = R ist:

$$|V_R| = |v_m(1 + 3N)/R(1 + N)[- (R/R)^{1/N}](1 + 1/N)|$$

$$= v_m(1 + 3N)/(RN) \tag{33}$$

Ferner ergibt sich mit der Schubspannung $\tau_{nWR} = D \cdot R/2L$ an der Wand des Meßrohrs:

$$\varepsilon_s = \tau_{nWR}/|V_R| = (DNR^2)/[2v_m L(1 + 3N)] \tag{34}$$

$$K = \tau_{nWR}/|V_R|^N = [DR/(2L)] \cdot \{RN/[v_m(1 + 3N)]\}^N \tag{35}$$

Da die Gleichungen (34), (35) jeweils $v_m$ und N enthalten, die entsprechend den Gleichungen (28) bis (31) durch Messung der ersten Potentialdifferenz $u_{k1}$ bzw. $u_{k2}$ und der zweiten Potentialdifferenz $u_{g1}$ bzw. $u_{92}$ erhalten werden können, lassen sich auch die Konsistenz K und/oder die scheinbare Viskosität $\in_s$ mit dem magnetisch-induktiven Durchflußmesser der Erfindung messen.

Es ist aufgrund der jeweiligen mathematischen Struktur der obigen Gleichungen, die lediglich übliche Grund-Rechenoperationen umfassen, klar, daß die Auswerte-Elektronik 24 zur Bildung des Geschwindigkeitsignals $S_V$, des Fließindexsignals $S_N$, des Konsistenzsignals $S_K$ und des Viskositätssignals $S_\in$ mit den den hierzu erforderlichen, einzelnen Rechenschritten entsprechenden Rechenstufen, wie z.B. Addierern, Subtrahierern, Multiplizierern, Dividierern, Potenzierem, ausgestattet ist.

Diese Rechenstufen sind für den Fall, daß die von den Elektroden 13, 14 und den Drucksensoren 31, 32 stammenden Signale, die Analog-Signale sind, durchgehend analog verarbeitet werden sollen, Analog-Rechenstufen.

Besonders günstig ist es, wenn die von den Elektroden 13, 14 und den Drucksensoren 31, 32 stammenden Analog-Signale einem Analog/Digital-Wandler zugeführt und somit digitalisiert werden. In diesem Fall ist die Auswerte-Elektronik 24 dann ein digitaler Signalprozessor, z.B. ein Mikroprozessor.

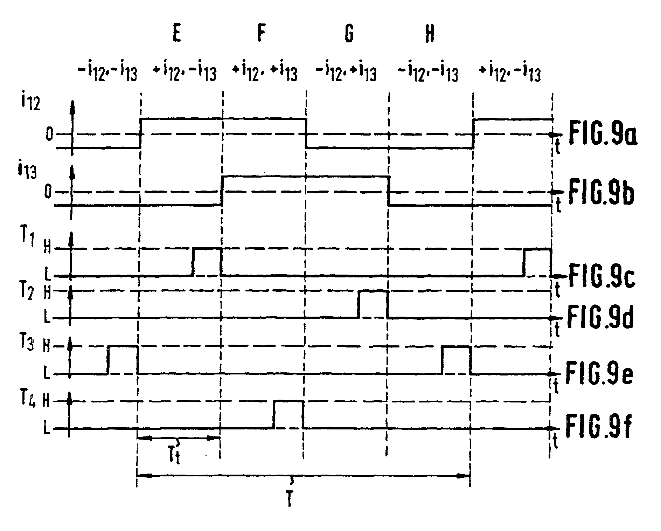

In Fig. 9 sind Kurvenformen von Spulenströmen $i_{12}$, $i_{13}$ gezeigt, bei deren Benutzung auf den Umschalter 22 verzichtet werden kann. Diese Spulenströme können vom Spulenstrom-Generator 23 erzeugt werden. Da nämlich, wie oben schon erläutert wurde, bei bipolaren Gleichströmen als Spulenstrom deren Richtung periodisch umzupolen ist, kann die gleich- bzw. gegensinnige Reihenschaltung der beiden Spulen 12, 13 in diese Umpolung mit einbezogen werden.

So können z.B. statt eines einzigen Stromkreises mit Umschalter wie in Fig. 3, der die beiden Spulen mit Strom versorgt, diese auch getrennt voneinander abwechselnd gleich- bzw. gegensinnig gespeist werden, wie dies in Fig. 9 dargestellt ist.

In Fig. 9a ist der Verlauf des Spulenstroms $i_{12}$ und in Fig. 9b der Verlauf des Spulenstroms $i_{13}$ jeweils über der Zeitvariablen t gezeigt. Es handelt sich beim Spulenstrom $i_{12}$ um einen vier gleichlange Teil-Periodendauern E, F, G, H mit der jeweiligen Dauer $T_t$ aufweisenden Impulsstrom, dessen Gesamt-Periodendauer T gleich der Summe der vier Teil-Periodendauern ist:

$$T = 4 \cdot T_t \tag{36}$$

Während der Periodendauern E, F ist der Impulstrom positiv und während der Periodendauern G, H negativ. Der Spulenstrom $i_{13}$ ist von derselben Kurvenform wie der Spulenstrom $i_{12}$, jedoch um eine die Dauer $T_t$ gegenüber diesem pasenverschoben.

Daher ergeben sich in den einzelnen Teil-Periodendauern E, F, G, H die zu diesen jeweils gehörenden Strom-

paare $+i_{12}$, $-i_{13}$ bzw. $+i_{12}$, $+i_{13}$ bzw. $-i_{12}$, $+i_{13}$ bzw. $-i_{12}$, $-i_{13}$. In den Periodendauern F, H sind somit die Spulen 12, 13 gleichsinnig, demgegenüber in den Periodendauern E, G gegensinnig in Reihe geschaltet. Ferner ist die erwähnte Bipolarität zu sehen: Periodendauer F bipolar zu Periodendauer H bzw. Periodendauer E bipolar zu Periodendauer G.

Die in den Fig. 9 c, 9d, 9e, 9f wieder über der Zeitvariablen t gezeigten Taktsignale $T_1$, $T_2$, $T_3$, $T_4$ stammen aus der Ablaufsteuerung 23 und haben jeweils dieselbe Gesamt-Periodendauer wie die Spulenströme der Fig. 9a, 9b. Die Taktsignale $T_1$, $T_2$, $T_3$, $T_4$ sind zeitlich so gelegt, daß in jeder Teil-Periodendauer ein H-Pegel ca. während deren jeweiligen letzten Drittels auftritt.

Während des jeweiligen H-Pegels werden die dann an den Elektroden 14, 15 vorhandenen Potentiale zur Auswerte-Elektronik 24 durchgeschaltet. Während der L-Pegel werden dagegen keine Signale von der Auswerte-Elektronik 24 übernommen.

### Patentansprüche

1.  Magnetisch-induktiver Durchflußmesser, mit dem die mittlere Geschwindigkeit $v_m$ und der Fließindex N einer elektrisch leitenden, in einem Meßrohr (11) strömenden, nicht-newtonschen Flüssigkeit zu messen sind, dessen die Flüssigkeit berührender Teil elektrisch nicht-leitend ist, welcher Durchflußmesser zusätzlich zum Meßrohr (11) umfaßt:

    -   eine außen am oder in einer Wand des Meßrohrs diametral zu einer außen am oder in dieser Wand angeordneten ersten Spule (12) angeordnete zweite Spule (13),

        --   welche Spulen der Erzeugung eines die Wand des Meßrohrs und die Flüssigkeit durchsetzenden Magnetfelds ($\underline{B}$) dienen, wenn in den Spulen ein Spulenstrom (i) fließt,

    -   eine dem Abgriff eines vom Magnetfeld induzierten ersten Potentials dienende erste Elektrode (14),
    -   eine dem Abgriff eines vom Magnetfeld induzierten zweiten Potentials dienende zweite Elektrode (15),

        --   wobei ein zu jeder Elektrode gehörender Radius ($14_1$, ($15_1$) des Meßrohrs einen Winkel ($\phi$) von weniger als 90° mit der Richtung des Magnetfelds einschließt,

    -   einen Spulenstrom-Generator (21),
    -   einen Umschalter (22), mit dem die beiden Spulen entweder gleichsinnig oder gegensinnig in Serie schaltbar sind, und
    -   eine Auswerte-Elektronik (24), die

        --   aus einer bei gleichsinnig in Serie geschalteten Spulen von den Elektroden abgegriffenen ersten Potentialdifferenz ($u_k$) ein der mittleren Geschwindigkeit $v_m$ proportionales Geschwindigkeitssignal ($S_v$) bzw.
        --   aus einer bei gegensinnig in Serie geschalteten Spulen von den Elektroden abgegriffenen zweiten Potentialdifferenz ($u_g$) und der ersten Potentialdifferenz ($u_k$) ein dem Fließindex N proportionales Fließindexsignal ($S_N$) bildet und anhand des Fließindexsignals (SN) den Fließindex (N) mißt.

2.  Magnetisch-induktiver Durchflußmesser nach Anspruch 1,

    -   bei dem in der Wand des Meßrohrs (11) entlang einer seiner Mantellinien ein erster und ein davon beabstandeter zweiter Drucksensor (31, 32) angeordnet sind und
    -   bei dem die Auswerte-Elektronik (24)

        --   aus einer Differenz (D) von von den Drucksensoren abgegebenen Signalen,
        --   aus der ersten Potentialdifferenz ($u_k$) und
        --   aus der zweiten Potentialdifferenz ($u_g$)

    -   ein der Konsistenz K der Flüssigkeit proportionales Konsistenzsignal ($S_K$) und/oder ein der scheinbaren Viskosität $\in_S$ der Flüssigkeit proportionales Viskositätssignal ($S_\in$) bildet.

3.  Magnetisch-induktiver Durchflußmesser nach Anspruch 1, bei dem der zu jeder Elektrode (14, 15) gehörende Radius ($14_1$, $15_1$) des Meßrohrs (11) einen Winkel von 60° mit der Richtung des Magnetfelds ($\underline{B}$) einschließt.

**4.** Magnetisch-induktiver Durchflußmesser nach Anspruch 1, bei dem der zu jeder Elektrode (14, 15) gehörende Radius ($14_1$, $15_1$) des Meßrohrs (11) einen Winkel von 45° mit der Richtung des Magnetfelds ($\underline{B}$) einschließt.

**Claims**

**1.** An electromagnetic flowmeter for measuring the average velocity $V_m$ and the flow index N of an electrically conductive non-Newtonian fluid flowing in a measuring tube (11) whose portion coming into contact with the fluid is electrically non-conductive, said flowmeter comprising in addition to the measuring tube (11):

- a first coil (12) and a second coil (13) disposed diametrically opposite to each other on the outside or in a wall of the measuring tube,

-- said coils serving to produce a magnetic field (B) cutting across the wall of the measuring tube and the fluid when a coil current (i) flows through the coils;

- a first electrode (14) serving to pick off a first potential induced by the magnetic field;
- a second electrode (15) serving to pick off a second potential induced by the magnetic field;

-- a respective radius ($14_1$, $15_1$) of the measuring tube at the point of each of the electrodes making an angle ($\phi$) of less than 90° with the direction of the magnetic field;

- a coil-current generator (21) which form;

-- a double-pole switch with which the two coils are connectable either in series aiding or in series opposition; and

- evaluation electronics (24) which form

-- a velocity signal ($S_v$) proportional to the average velocity $V_m$) from a first potential difference ($U_k$), picked off the electrodes arranged with the coils connected in series aiding or,
-- a flow index signal proportional to the flow index N from a second potential difference ($U_g$), picked off the electrodes with the coils connected in series opposition, and the first potential difference ($U_k$) and which determines the flow index (N) according to the flow index signal ($S_N$). electrodes with the coils connected in series opposition, and the first potential difference ($u_{k)}$.

**2.** The electromagnetic flowmeter as claimed in claim 1 wherein

- a first pressure sensor (31) and a second pressure sensor (32) are mounted at a distance from each other in the wall of the measuring tube along the generating lines thereof, and
- the evaluation electronics (24) form a consistency signal ($S_K$) proportional to the consistency K of the fluid and/or a viscosity signal ($S_\varepsilon$) porportional to the apparent viscosity $\varepsilon_s$ of the fluid

-- from a difference (D) of signals provided by the pressure sensors,
-- from the first potential difference ($u_k$), and
-- from the second potential difference ($u_g$).

**3.** The electromagnetic flowmeter as claimed in claim 1 wherein the respective radius ($14_1$, $15_1$) of the measuring tube (11) at the point of each of the electrodes (14, 15) makes an angle of 60° with the direction of the magnetic field.

**4.** The electromagnetic flowmeter as claimed in claim 1 wherein the respective radius ($14_1$, $15_1$) of the measuring tube (11) at the point of each of the electrodes (14, 15) makes an angle of 45° with the direction of the magnetic field.

**Revendications**

**1.** Débitmétre magnéto-inductif permettant de mesurer la vitesse moyenne $V_m$ et l'indice d'écoulement N d'un fluide non newtonien conduisant l'électricité s'écoulant dans un tube de mesure (11), dont la partie en contact avec le fluide ne conduit pas l'électrcité, qui, outre le tube de mesure (11), comprend:

- une deuxième bobine (13) disposée à l'extérieur du tube de mesure ou dans une paroi dudit tube de maniére diamétralement opposée à une première bobine (12)située á l'extérieur du tube de mesure ou dans cette paroi,

-- les deux bobines servant à produire un champ magnétique ($\underline{B}$) traversant la paroi du tube de mesure et le fluide lorsqu'un courant (i) passe dans les bobines,

- une première electrode (14) servant à déterminer un premier potentiel induit par le champ magnétique,
- une deuxième électrode (15) servant à déterminer un deuxième potentiel induit par le champ magnétique,

-- un rayon ($14_1$, $15_1$) du tube de mesure appartenant á chaque électrode formant avec la direction du champ magnétique un angle ($\phi$) inférieur à 90°,

- un générateur de courant (21),
- un commutateur (22) permettant de monter en série les deux bobines, soit dans le méme sens, soit en sens contraire, et
- une électronique d'explotation (24) qui forme

-- un signal de vitesse ($S_v$) proportionnel à la vitesse moyenne $V_m$ á partir d'une première différence de potentiel ($U_k$) déterminée par les électrodes dans le cas de bobines montées en série dans le méme sens, et

- un signal d'indice d'écoulement ($S_n$) proportionnel á l'indice d'écoulement N á partir d'une deuxiéme différence de potentiel ($U_g$) déterminée par les électrodes dans le cas de bobines montées en série dans le sens contraire et de la première différence de potentiel ($U_k$) et déterminant l'indice d'écoulement (N) par rapport au signal d'indice d'écoulement ($S_N$).

2. Débitmètre magnéto-inductif suivant la revendication 1,

- dans lequel un premier, ainsi qu'un deuxième capteur de pression (31, 32) situé à une certaine distance du premier, sont disposés dans la paroi du tube de mesure (11) le long d'une de ses génératrices et

-- dans lequel l'électronique d'exploitation (24) forme un signal de consistance ($S_K$) proportionnel à la consistance K du fluide et/ou un signal de viscosité ($S_\varepsilon$) proportionnel à la viscosité apparente $\varepsilon_s$ du fluide à partir
-- d'une différence (D) entre les signaux émis par les capteurs de pression,
-- de la première différence de potentiel ($u_k$) et
-- de la deuxième différence de potentiel ($u_g$).

3. Débitmètre magnéto-inductif suivant la revendication 1, dans lequel le rayon ($14_1$, $15_1$) du tube de mesure (11) appartenant à chaque électrode (14, 15) forme un angle de 60° avec la direction du champ magnétique ($\underline{B}$).

4. Débitmètre magnéto-inductif suivant la revendication 1, dans lequel le rayon ($14_1$, $15_1$) du tube de mesure (11) appartenant à chaque électrode (14, 15) forme un angle de 45° avec la direction du champ magnétique ($\underline{B}$).

FIG.1

FIG.2

FIG.3

EP 0 770 855 B2

FIG. 4

FIG. 5

FIG. 6

FIG. 7

FIG. 8

15

FIG.9a

FIG.9b

FIG.9c

FIG.9d

FIG.9e

FIG.9f